(19) Europäisches Patentamt
European Patent Office
Office européen des brevets

(11) Veröffentlichungsnummer: **0 338 361**
**A2**

# (12) EUROPÄISCHE PATENTANMELDUNG

(21) Anmeldenummer: 89106263.0

(51) Int. Cl.⁴: **C08L 81/06 , C08L 51/08**

(22) Anmeldetag: 08.04.89

(30) Priorität: 22.04.88 DE 3813586

(43) Veröffentlichungstag der Anmeldung:
25.10.89 Patentblatt 89/43

(84) Benannte Vertragsstaaten:
DE FR GB IT

(71) Anmelder: **BAYER AG**
D-5090 Leverkusen 1 Bayerwerk(DE)

(72) Erfinder: **Eckel, Thomas, Dr.**
Gneisenaustrasse 15 a
D-4047 Dormagen 1(DE)
Erfinder: **Wittmann, Dieter, Dr.**
Wolfskaul 4
D-5000 Köln 80(DE)
Erfinder: **Ott, Karl-Heinz, Dr.**
Paul-Klee-Strasse 54
D-5090 Leverkusen(DE)
Erfinder: **Fuhr, Karl, Dr.**
Krüllsdyk 55
D-4150 Krefeld 1(DE)

## (54) Thermoplastische Formmassen aus aromatischen Polyethersulfonen und gepfropften Silikonkautschuken.

(57) Gegenstand der vorliegenden Erfindung sind thermoplastische Formmassen enthaltend aromatische Polyethersulfone, gepfropfte Silikonkautschuke und gegebenenfalls übliche Additive, ein Verfahren zu ihrer Herstellung durch Mischen der Komponenten bei erhöhter Temperatur sowie die Verwendung der Formmassen zur Herstellung von Formkörpern, vornehmlich durch Spritzguß.

EP 0 338 361 A2

# Thermoplastische Formmassen aus aromatischen Polyethersulfonen und gepfropften Silikonkautschuken

Die Erfindung betrifft thermoplastische Formmassen auf Basis von aromatischen Polyethersulfonen und gepfropftem Silikonkautschuk, ein Verfahren zu ihrer Herstellung durch Mischen der Komponenten bei erhöhter Temperatur und ihre Verwendung zur Herstellung von Formkörpern, vornehmlich durch Spritzguß.

Formmassen auf Basis aromatischer Polyethersulfone sind bekannt. Sie besitzen sehr hohe Wärmeformbeständigkeiten, erreichen jedoch häufig nicht die für bestimmte Anwendungen geforderten hohen Kerbschlagzähigkeiten.

Zur Verbesserung der Schlagzähigkeiten werden Mischungen von Polyethersulfonen mit ABS vorgeschlagen; dabei geht jedoch die Wärmeformbeständigkeit der Formmassen stark zurück (DE-AS 1 794 171, DE-OS 3 601 420). Als weiterer Nachteil wirkt sich aus, daß die verwendeten Dienkautschuke aufgrund ihrer bekannten Empfindlichkeit gegen thermischen und oxidativen Angriff für einige Anwendungen (Außeneinsatz) solcher Formmassen unbrauchbar sind. Auf der anderen Seite verleihen Polyolefine, Acrylatkautschuke und Styrolcopolymerisate, die als witterungsbeständig bekannt sind, den Formassen nicht die gewünschte befriedigende Schlagzähigkeit, insbesondere nicht bei tiefen Temperaturen (UD 3 641 207, DE-OS 3 601 419).

Silikonkautschuke zeichnen sich bekanntlich durch hohe Schlagzähigkeit auch bei Kälte aus (DE-OS 2 539 572). Die Erfahrung zeigt jedoch, daß Mischungen aus Thermoplasten und üblichen Silikonkautschuken Formkörper mit ungleichmäßiger Oberfläche ergeben.

Überraschenderweise wurde nun gefunden, daß sich Mischungen aus aromatischem Polyethersulfon und Silikonkautschuk zu Formkörpern mit hoher Wärmeformbeständigkeit, sehr guter Kerbschlagzähigkeit, besonders bei tiefen Temperaturen, und verbesserter Oberflächenqualität verarbeiten lassen, wenn man speziell gepfropfte, teilchenförmige Silikonkautschuke verwendet. Zusätzlich besitzen diese Formmassen im Vergleich zu den in DE-AS 1 794 171, DE-OS 3 602 420, US 3 641 207 und DE-OS 3 602 419 genannten eine ausgezeichnete Witterungsstabilität.

Gegenstand der Erfindung sind thermoplastische Formmassen enthaltend

A.

5 bis 99, vorzugsweise 40 bis 98, insbesondere 60 bis 97, Gew.-%, bezogen auf die Summe A + B eines aromatischen Polyethersulfons, und

B.

1 bis 95, vorzugsweise 2 bis 60, insbesondere 3 bis 40, Gew.-%, bezogen auf die Summe A + B, eines Silikonpfropfpolymerisats aus

B.1

5 bis 90, vorzugsweise 20 bis 80, Gewichtsteilen einer Mischung aus

B.1.1

einer Mischung aus - jeweils bezogen auf Komponente B.1 - 30 bis 40, vorzugsweise 33 bis 36, Gew.-% $\alpha$-Methylstyrol, 52 bis 62, vorzugsweise 54 bis 57, Gew.-% Methylmethacrylat und 4 bis 14, vorzugsweise 8,5 bis 11,5 Gew.-% Acrylnitril und/oder

B.1.2

einer Mischung aus

B.1.2.1

50 bis 95 Gew.-Teilen Styrol, $\alpha$-Methylstyrol, $C_1$-$C_4$-Alkyl-oder Halogen-kernsubstituiertem Styrol, Methylmethacrylat oder Mischungen daraus und

B.1.2.2

5 bis 50 Gew.-Teilen Acrylnitril, Methacrylnitril, Methylmethacrylat, Maleinsäureanhydrid, $C_1$-$C_4$-Alkyl-bzw. Phenyl-N-substituiertem Maleinimid oder Mischungen daraus, sowie gegebenenfalls

B.1.2.3

0 bis 40, vorzugsweise 0 bis 20, Gew.-Teilen Acrylsäureester eines primären oder sekundären einwertigen aliphatischen $C_2$-$C_{10}$-Alkohols und/oder

B.1.2.4

0 bis 10, vorzugsweise 0 bis 4, Gew.-Teilen Acryl- oder Methacrylsäureester der tert.-Butanols auf

B.2

10 bis 95, vorzugsweise 20 bis 80, Gew.-Teile Silikonkautschuk mit einem mittleren Teilchendurchmesser $d_{50}$ von 0,09 bis 1, vorzugsweise 0,09 bis 0,4 $\mu$m und einem Gelgehalt von mehr als 50, vorzugsweise mehr als 70, insbesondere 73 bis 98, Gew.-%, bezogen auf B.2, erhältlich aus

a. Dihalogendiorganosilan,

b. 0 bis 10 Mol-%, bezogen auf a., Trihalogenorganosilan,
c. 0 bis 3 Mol-%, bezogen auf a., Tetrahalogensilan und
d. 0 bis 0,5 Mol-%, bezogen auf a., Halogentriorganosilan, wobei die Organylreste der Verbindungen a., b. und d.
α) $C_1$-$C_6$-Alkyl oder Cyclohexyl, vorzugsweise Methyl, Ethyl,
β) $C_{6-12}$-Aryl, vorzugsweise Phenyl,
γ) $C_1$-$C_6$-Alkenyl, vorzugsweise Vinyl, Allyl, und
δ) Mercapto-$C_1$-$C_6$-alkyl, vorzugsweise Mercaptopropyl,
bedeuten können, mit der Maßgabe, daß die Summe ($\gamma + \delta$) 2 bis 10 Mol-%, bezogen auf alle Organylreste der Verbindungen a., b. und d., und das Molverhältnis $\gamma$:$\delta$ (3:1) bis (1:3), vorzugsweise (2:1) bis (1:2), betragen, wobei
vorzugsweise mindestens 80 Mol-% der Organylreste der Komponenten a., b. und. Methyl der Gruppe α sind.

<u>Komponente A</u>

Aromatische Polyethersulfone im Sinne der Erfindung lassen sich als lineare, thermoplastische Polyarylenpolyetherpolysulfone beschreiben, in welchem die Aryleinheiten von Ether- und Sulfonbindungen unterbrochen sind. Diese Harze erhält man durch Umsetzung eines Alkalimetalldoppelsalzes eines zweiwertigen Phenols (Bisphenols) mit einer zwei Halogenatome aufweisenden benzoiden Verbindung, wobei entweder eine oder beide Verbindung(en) die zum Einbau von Sulfoneinheiten in die Arylen- und Ethereinheiten aufweisende Polymerenkette notwendige Sulfonbindung ($-SO_2-$) besitzt. Die Polyethersulfone sowie ihre Herstellung sind literaturbekannt. (Siehe beispielsweise US-PS 3 264 536, GB-PS 1 264 900 oder EP-0 038 028)

Das Polyethersulfonharz besitzt eine Grundstruktur, die aus wiederkehrenden Einheiten der Formel (I)

$\{O-Z-O-W\}$ (I)

besteht.

Darin bedeuten:
Z den Rest eines zweiwertigen Phenols und
W den Rest der benzoiden Verbindung mit einer inerten, elektronenanziehenden Gruppe,
wobei gilt, daß beide Reste durch aromatische Kohlenstoffatome über Valenzbindungen mit den Ethersauerstoffatomen verbunden sind und mindestens einer der Reste Z und/oder W eine Sulfongruppe zwischen aromatischen Kohlenstoffatomen liefert. Solche Polyethersulfone gehöhren in die in der USA-Patentschrift 3 264 536 beschriebene Klasse von Polyarylen-polyetherharzen.

Bevorzugte Diphenole für die Herstellung der aromatischen Polyethersulfone gemäß Komponente A sind Verbindungen der Formel (II)

HO-Z-OH (II),

worin
Z einen zweiwertigen ein- oder mehrkernigen aromatischen Rest mit 6-30 C-Atomen bedeutet, wobei Z derart gebaut ist, daß die beiden OH-Gruppen direkt an je ein C-Atom eines aromatischen Systems gebunden sind.

Besonders bevorzugte Diphenole sind Verbindungen der Formel (III)

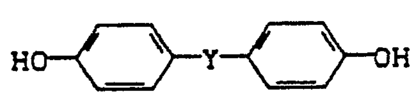 (III),

in der
Y eine Einfachbindung, einen Alkylen- oder Alkylidenrest mit 1-7 C-Atomen, einen Cycloalkylen- oder Cycloalkylidenrest mit 5-12 C-Atomen, -O-, -S-,
$-\underset{\overset{\parallel}{O}}{S}-$, $-SO_2$ oder $-\underset{\overset{\parallel}{O}}{C}-$ bedeutet,
sowie deren kernalkylierte und kernhalogenierte Derivate.

Beispiele für Diphenole sind
Hydrochinon,
Resorcin,

Dihydroxydiphenyle
Bis-(hydroxyphenyl)-alkane,
Bis-(hydroxyphenyl)-cycloalkane,
Bis-(hydroxyphenyl)-ether,
Bis-(hydroxyphenyl)-ketone,
Bis-(hydroxyphenyl)-sulfoxide,
Bis-(hydroxyphenyl)-sulfone und
α.α′-Bis-(hydroxyphenyl)-diisopropylbenzole
sowie deren kernalkylierte und kernhalogenierte Derivate.

Die wichtigsten Diphenole sind: Bisphenol-A, Tetramethylbisphenol-A, 4,4′-Dihydroxybiphenyl, 1,1-Bis-(4-hydroxyphenyl)-isobutan, 1,1-Bis-(4-hydroxyphenyl)-cyclohexan, 4,4′-Dihydroxydiphenylsulfid, 4,4′-Dihydroxydiphenylsulfon sowie deren di- und tetrahalogenierte Derivate. Besonders bevorzugt ist Bisphenol A. Es können auch beliebige Mischungen der genannten Diphenole verwendet werden.

Bevorzugte aromatische Dihalogenverbindungen sind zweikernige Verbindungen der Formel (IV)

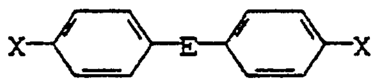 (IV),

Darin bedeuten X Halogenatome wie F, Cl, Br, J-Atome und E elektronenanziehende Gruppen, wie beispielsweise eine Sulfon-, Carbonyl-, Vinyl-, Sulfoxid- oder Azogruppe. Jeder der beiden Kerne kann zusätzlich eine oder mehrere Substituenten aus der Gruppe der gesättigten Kohlenwasserstoffe oder der elektronenanziehenden Verbindungen tragen.

Bevorzugte aromatische Dihalogenverbindungen sind 4,4′-Dichlordiphenylsulfon und 4,4′-Dichlorbenzophenon.

Mögliche Verzweigungsmittel sind die für die Herstellung von aromatischen Polyestern (DE-OS 2 940 024) und für die Herstellung von aromatischen Polyestercarbonaten (DE-OS 3 007 934) genannten. (Siehe Seiten 9 und 10 der DE-OS 2 940 024 und Seite 9 der DE-OS 3 007 934).

Als Kettenabbrecher für die aromatischen Polyethersulfone gemäß Komponente A werden vorzugsweise Phenol. Alkylphenole mit $C_1$-$C_{12}$-Alkylgruppen und halogenierte Phenole sowie Bromide und Chloride von $C_1$-$C_8$-Alkanen in Mengen von 0,1 bis 10 Mol-% (im Falle von Phenolen bezogen auf Diphenole, im Falle von Chloriden bezogen auf die aromatische Dihalogen-Verbindungen) verwendet.

Die reduzierten Viskositäten ($\eta_{red}$) der aromatischen Polyethersulfone A liegen im Bereich von 0,15 bis 1,5 dl/g vorzugsweise von 0,35 bis 0,65 dl/g (gemessen an Lösungen von 20 mg Polyethersulfon A in 10 ml $CHCl_3$ bei 25 °C).

Komponente B

Bevorzugte Silikonkautschuke B.2 sind solche, deren Organylreste zu mindestens 80 Mol-% aus Methylgruppen bestehen.

Als Endgruppe fungiert im allgemeinen eine Diorganylhydroxyl-siloxy-Einheit, vorzugsweise eine Dimethylhydroxysiloxy-Einheit.

Für die Herstellung der Silikonkautschuke B.2 bevorzugte Silane a) bis d) enthalten als Halogensubstituenten Chlor.

"Erhältlich" im Sinne der Erfindung bedeutet, daß der Silikonkautschuk B.2 nicht unbedingt aus den Halogenverbindungen a) bis d) hergestellt werden muß. Die Definition umfaßt vielmehr auch Silikonkautschuke B.2 gleicher Struktur, die aus Silanen mit anderen hydrolysierbaren Gruppen, wie z.B. $C_1$-$C_6$-Alkoxygruppen, oder aus cyclischen Siloxanoligomeren hergestellt worden sind.

Die Herstellung der erfindungsgemäßen Silikonpfropfpolymerisate B kann beispielsweise nach einem Verfahren, das in 3 Stufen durchgeführt wird, erfolgen.

In der ersten Stufe werden literaturbekannte Monomere wie beispielsweise Dimethyldichlorsilan oder Vinylmethyldichlorsilan sowie Dichlorsilane mit anderen Substituenten zu den leicht zugänglichen und durch Destillation einfach zu reinigenden cyclischen Oligomeren Octamethyltetrasiloxan oder Tetravinyltetramethyltetrasiloxan umgesetzt. Bezüglich Einzelheiten wird auf die Arbeit von R. Schliebs und J. Ackermann, Chem. in unserer Zeit, 4 (1987), 121-127, verwiesen.

In der zweiten Stufe werden aus diesen ebenfalls literaturbekannten cyclischen Oligomeren unter

Zugabe von γ-Mercaptopropylmethyldimethoxysilan durch ringöffnende kationische Polymerisation die vernetzten Silikonkautschuke B.2 erhalten.

In der dritten Stufe werden die erhaltenen Silikonkautschuke B.2, die über pfropfaktive Vinyl- und Mercaptogruppen verfügen, mit Vinylmonomeren oder Vinylmonomermischungen radikalisch gepfropft. Eine detaillierte Beschreibung der zweiten und dritten Synthesestufe wird in den folgenden Abschnitten gegeben.

Vorzugsweise geht man in der 2. Synthesestufe so vor, daß Mischungen aus cyclischen Siloxanoligomeren wie beispielsweise Octamethyltetrasiloxan und Tetramethyltetravinyltetrasiloxan in Emulsion ringöffnend kationisch in Gegenwart von Sulfonsäuren polymerisiert werden. Die entstehenden teilchenförmigen Silikonkautschuke fallen in Emulsion an.

Besonders bevorzugt ist das Verfahren gemäß GB-PS 1 024 024, das Alkylbenzolsulfonsäuren einsetzt, die sowohl katalytisch als auch als Emulgator wirksam sind. Nach erfolgter Polymerisation wird die Säure neutralisiert. Anstelle der genannten Alkylbenzolsulfonsäuren können aber auch n- Alkylsulfonsäuren eingesetzt werden. Es ist weiterhin möglich, neben der katalytisch wirksamen Sulfonsäure auch zusätzlich Co-Emulgatoren einzusetzen.

Derartige Co-Emulgatoren können nichtionischer sowie anionischer Natur sein. Als anionische Co-Emulgatoren kommen insbesondere Salze der obengenannten n-Alkyl- oder Alkylbenzolsulfonsäuren in Frage. Nichtionogene Co-Emulgatoren sind Polyoxyethylenderivate von Fettalkohole und Fettsäuren. Beispiele für derartige Emulgiermittel sind POE (3)-Laurylalkohol, POS (20)-Oleylalkohol, POE (7)-Nonylphenol oder POS (10)-Stearat. (Die Schreibweise POS (X)-Laurylalkohol bedeutet, daß an ein Molekül Laurylalkohol X einheiten Ethylenoxid addiert worden sind, wobei die Zahl X einen Mittelwert darstellt.

Die vernetzungs- und pfropfaktiven Gruppen γ und δ können in das Silikonpolymer durch Arbeiten in Anwesenheit geeigneter Siloxanoligomerer eingefügt werden. Geeignete Ausgangsoligomere sind z.B. Tetramethyltetravinylcyclotetrasiloxan oder γ-Mercaptopropylmethyldimethoxysilan oder dessen Hydrolysat.

Diese funktionellen Oligomeren werden dem Hauptoligomer, z.B. Octamethylcyclotetrasiloxan, bei der zweiten Reaktionsstufe in den gewünschten Mengen beigefügt.

Analog kann auch der Einbau längerkettiger Alkylreste, wie z.B. Ethyl, Propyl oder dgl. bzw. der Einbau von Phenylgruppen erreicht werden.

Eine ausreichende Vernetzung des Silikonkautschuks kann schon erreicht werden, wenn die Reste γ und δ bei der Emulsionspolymerisation miteinander reagieren, so daß die Zugabe eines externen Vernetzers entbehrlich sein kann. Jedoch kann ein Vernetzung-bewirkendes Silan zugefügt werden, um den Vernetzungsgrad des Silikonkautschukes zu erhöhen.

Verzweigungen oder Vernetzungen können durch Zugabe von z.B. Tetraethoxysilan oder eines Silans der allgemeinen Formel Organyl-$SiX_3$, wobei X eine hydrolysierbare Grup pe, insbesondere einen Alkoxy- oder Halogenrest, darstellt, erzielt werden. Insbesondere bevorzugt sind neben Tetraethoxysilan Methyltrimethoxysilan oder Phenyltrimethoxysilan.

Der mittlere Teilchendurchmesser der Silikonkautschuke $d_{50}$ ist der Durchmesser, oberhalb und unterhalb dessen jeweils 50 Gew.-% der Teilchen liegt. Er kann mittels Ultrazentrifugen-Messungen (W. Scholtan, H. Lange, Kolloid. Z. und Z. Polymere 250 (1972), 782-796) bestimmt werden.

Der Gelgehalt wird bei 25° C in Aceton bestimmt (vgl. DE-AS 2 421 288, SP. 6, Z. 17-37). Er beträgt bei den erfindungsgemäßen Silikonkautschuken mindestens 70, vorzugsweise 73-98 Gew.-%.

Die Pfropfpolymerisate B können durch radikalische Pfropfpolymerisation, beispielsweise analog DE-PS 2 421 288, hergestellt werden.

Zur Herstellung des Pfropfcopolymerisates B in der dritten Synthesestufe können die Pfropfmonomeren B.1.1 und/oder B.1.2 in Anwesenheit des Silikonkautschukes B. 2 radikalisch pfropfpolymerisiert werden, insbesondere bei 40 bis 90° C. Die Pfropfpolymerisation kann in Suspension, Dispersion oder Emulsion durchgeführt werden. Bevorzugt ist die kontinuierliche oder diskontituierliche Emulsionspfropfpolymerisation. Diese Pfropfpolymerisation wird unter Einsatz von Radikalinitiatoren durchgeführt (aus der Gruppe der Peroxide, Azoverbindungen, Hydroperoxide, Persulfate, Perphosphate) sowie auch gegebenenfalls unter Einsatz von anionischen Emulgatoren, z.B. Carboxoniumsalzen, Sul fonsäuresalzen oder organischen Sulfaten. Dabei bilden sich Pfropfpolymerisate mit hohen Pfropfausbeuten, d.h. ein großer Anteil des Polymerisates der Monomeren B.1 wird an den Silikonkautschuk B.2 chemisch gebunden. Dieser besondere Silikonkautschuk B.2 macht besondere Maßnahmen, die eine hohe Pfropfung ermöglichen, überflüssig.

Die erfindungsgemäßen Pfropfpolymerisate B sind solche, die man durch Pfropfpolymerisation von 5 bis 90, vorzugsweise 20 bis 80 Gewichtsteilen eines Vinylmonomeren oder eines Vinylmonomerengemisches auf 10 bis 95, vorzugsweise 20 bis 80 Gew.-Teile Silikonkautschuk B. 2 erhält.

Als besonders bevorzugtes Vinylmonomeres wird Methylmethacrylat genannt. Erfindungsgemäße Vinylmonomerenmischungen bestehen aus 50 bis 95 Gew.-Teilen Styrol, α-Methylstyrol (oder anderen Alkyl- oder Halogen-kernsubstituierten Styrolen) oder Methylmethacrylat einerseits und aus 5 bis 50 Gew.-Teilen

Acrylnitril, Methacrylnitril, Methylmethacrylat, Maleinsäureanhydrid oder substituierten Maleinimiden andererseits.

Bevorzugte Copolymerisate zum Aufbau der Pfropfhülle bestehen aus Styrol/Acrylnitril oder Styrol Maleinsäureanhydrid. Als weitere Vinylmonomerkomponenten können zusätzlich in kleineren Mengen Acrylsäureester von primären oder sekundären aliphatischen $C_2$-$C_{10}$-Alkoholen, vorzugsweise n-Butylacrylat oder Acryl- oder Methacrylsäureester des tert. Butanols, vorzugsweise t-Butylacrylat, anwesend sein. Besonders bevorzugte Pfropfhüllen können auch aus 30 bis 40 Gew.-Teilen $\alpha$-Methylstyrol, 52 bis 62 Gew.-Teilen Metylmethacrylat und 4 bis 14 Gew.-Teilen Acrylnitril aufgebaut sein.

Die so hergestellten Pfropfpolymerisate B können nach bekannten Verfahren aufgearbeitet werden, z.B. durch Koagulation der Latices mit Elektrolyten (Salzen, Säuren oder Gemischen davon) und anschließende Reinigung und Trocknung.

Bei der Herstellung der Pfropfpolymerisate B durch Pfropfcopolymerisation bilden sich im allgemeinen neben dem eigentlichen Pfropfcopolymerisat in bestimmten Ausmaß auch freie Polymerisate bzw. Copolymerisate der die Pfropfhülle bildenden Pfropfmonomeren.

Pfropfpolymerisate B im Sinne der Erfindung sind deshalb durch Polymerisation der Pfropfmonomeren B.1 in Gegenwart des Silikonkautschuks B.2 erhaltene Produkte, genau genommen also im allgemeinen ein Gemisch aus Pfropfcopolymerisat und freiem (Co-) Polymerisat der Pfropfmonomeren B.1.

Die erfindungsgemäßen Formmassen weisen optimale Eigenschaften auf, wenn die Menge an freiem (Co-) Polymerisat 50, vorzugsweise 30, insbesondere 20 Gew.-%, bezogen auf Komponente B, nicht übersteigt.

Die erfindungsgemäßen Formmassen können weitere, für aromatische Polyethersulfone sowie für Pfropfpolymerisate bekannte Zusätze, wie Stabilisatoren, Pigmente, Entformungsmittel, Flammschutzmittel und oder Antistatika, in den üblichen Mengen enthalten.

Die erfindungsgemäßen Formassen können hergestellt werden, indem man die Bestandteile in bekannter Weise vermischt und bei erhöhten Temperaturen, vorzugsweise bei 200 bis 350 °C, in üblichen Vorrichtungen, wie Innenknetern, Extrudern oder Doppelwellenschnecken, schmelzcompoundiert oder schmelzextrudiert. Die einzelnen Komponenten können nacheinander oder gleichzeitig gemischt werden.

Gegenstand der vorliegenden Erfindung ist somit auch ein Verfahren zur Herstellung von thermoplastischen Formmassen enthaltend die Komponenten A, B und gegebenenfalls Stabilisatoren, Pigmente, Entformungsmittel, Flammschutzmittel und/oder Antistatika, das dadurch gekennzeichnet ist, daß man die Komponenten A, B und gegebenenfalls Stabilisatoren, Pigmente, Entformungsmittel, Flammschutzmittel und oder Antistatika in bekannter Weise vermischt und bei erhöhten Temperaturen, vorzugsweise bei Temperaturen von 200 °C bis 350 °C, in üblichen Vorrichtungen, wie Innenknetern, Extrudern oder Doppelschnecken, schmelzcompoundiert oder schmelzextrudiert.

Die erfindungsgemäßen Formmassen können zur Herstellung von Formkörpern jeder Art, z.B. durch Spritzgießen verwendet werden. Beispiele für Formkörper sind: Gehäuseteile (z.B. für Haushaltsgeräte, wie Saftpressen, Kaffeemaschinen, Mixer, Mikrowellengeschirr), Abdeckplatten für das Baugewerbe, Automobilteile. Sie werden außerdem für elektrische Geräte, z.B. für Steckerleisten, Spulenkörper und Leiterplatten, eingesetzt.

Formkörper können auch durch Tiefziehen aus vorher hergestellten Platten oder Folien hergestellt werden.

Weiterer Gegenstand der Erfindung ist also die Verwendung der beschriebenen Formmassen zur Herstellung von Formkörpern.

Beispiele

Angegebene Teile bedeuten Gewichtsteile.

A. Aromatisches Polyethersulfon

1141,7 Teile Bis-2,2(4-hydroxyphenyl)propan und 1435,8 Teile Bis-(4-chlor-phenyl)-sulfon werden unter Stickstoff in 4500 Teilen N-methylpyrrolidon und 970 Teilen Chlorbenzol gelöst und mit 760 Teilen wasserfreiem Kaliumcarbonat versetzt. Das Reaktionsgemisch wird innerhalb von 30 Minuten auf 180 °C erhitzt und dort für 5 Stunden gehalten, wobei ein Gemisch aus Wasser und Chlorbenzol abdestilliert. Innerhalb weiterer 4 Stunden wird das Chlorbenzol abdestilliert. Nach einer Reaktionszeit von 6 Stunden

wird das Reaktionsgemisch auf 60-70 ° C abgekühlt, das Polymere in Methanol ausgefällt, mit Wasser gewaschen und im Vakuum getrocknet. Das Produkt besitzt eine reduzierte Viskosität von $\eta_{red}$ = 0,52 dl/g ($CHCl_3$ bei 25 ° C).

B. Pfropfpolymerisat

1. Herstellung der Silikonkautschuk-Emulsion (B.2)

38,4 Teile Octamethylcyclotetrasiloxan, 1,2 Teile Tetramethyltetravinylcyclotetrasiloxan und 1 Teil γ-Mercaptopropylmethyldimethoxysiloxan werden miteinander ver rührt. 0,5 Teile Dodecylbenzolsulfonsäure werden zugefügt, anschließend 58,4 Teile Wasser innerhalb einer Stunde zugegeben. Dabei wird intensiv gerührt. Die Voremulsion wird mit Hilfe einer Hochdruckemulgiermaschine 2 mal bei 200 bar homogenisiert. Man gibt weitere 0,5 Teile Dodecylbenzolsulfonsäure hinzu. Die Emulsion wird 2 Stunden bei 85 ° C und anschließend 36 Stunden bei 20 ° C gerührt. Neutralisiert wird mit Hilfe von 5 n-NaOH. Es resultiert eine stabile Emulsion mit einem Feststoffgehalt von ca. 36 Gew.-%. Das Polymer besitzt einen Gelgehalt von 82 Gew.-%, gemessen in Toluol; die mittlere Teilchengröße beträgt 300 nm.

2. Herstellung der Pfropfpolymerisate B

In einem Reaktor werden vorgelegt:
2107 Teile Latex B.2 und
1073 Teile Wasser

Nach Initiierung mittels einer Lösung von 7,5 Teilen Kaliumperoxydisulfat in 195 Teilen Wasser bei 65 ° C werden jeweils folgende Lösungen zur Herstellung der Pfropfkautschuke $B_1$ und $B_2$ in den Reaktor innerhalb von 4 Stunden gleichmäßig eingespeist:

$B_1$:
Lösung 1: 540 Teile Styrol und 210 Teile Acrylnitril;
Lösung 2: 375 Teile Wasser und 15 Teile Natriumsalz von $C_{14}$-$C_{18}$-Alkylsulfonsäuren.

$B_2$:
Lösung 1: 750 Teile Methylmethacrylat
Lösung 2: 375 Teile Wasser und 15 Teile Natriumsalz von $C_{14}$-$C_{18}$-Alkylsulfonsäuren.

Anschließend wird jeweils innerhalb von 6 Stunden bei 65 ° C auspolymerisiert. Es resultiert ein Latex mit einem Feststoffgehalt von ca. 33 Gew.-%.

Nach Koagulation mit einer wäßrigen Magnesiumchlorid/-Essigsäure-Lösung, Filtration und Trocknung im Vakuum werden die Pfropfpolymerisate in Form weißer Pulver erhalten.

Herstellung und Prüfung der erfindungsgemäßen Formmassen

Die Komponenten A und B wurden auf einem 1,3 1-Innenkneter bei Temperaturen zwischen 210 und 250 ° C aufgeschmolzen und homogenisiert.

Von den Formassen wurden auf einer Spritzgußmaschine Stäbe der Abmessung 80 x 10 x 4 mm (Verarbeitungstemperatur: 280 ° C) hergestellt, an denen die Kerbschlagzähigkeit (nach Methode ISO 180) bei Raumtemperatur, 0 ° C, -20 ° C, -40 ° C und -60 ° C gemessen wurde.

Daraus wurde der Zäh-Spröd-Übergang bestimmt, d.h. jener Temperaturbereich, in dem die ersten Sprödbrüche auftreten.

Das Spannungrißverhalten wurde an Proportionalstäben 0,7, Massetempertur 280 ° C, gemäß DIN 53 449/3 untersucht. Als Kraftstoffsimulanz wurde eine Mischung aus 50 % Toluol und 50 % Isooctan verwendet. Die Probekörper wurden mittels einer Kreisbogenschablone vorgedehnt und 5 Minuten (bzw. 10 Minuten) bei 23 ° C im Kraftstoffsimulanz gelagert. Die Vordehnung $\epsilon_x$ betrug 0,4 bis 2,4 %. Das Spannungsrißverhalten wurde über die Rißbildung bzw. den Bruch in Abhängigkeit der Vordehnung beurteilt.

Die Bestimmung der Wärmeformbeständigkeit nach Vicat B erfolgte gemäß DIN 53 460.

Wie nachfolgende Tabelle zeigt, werden erfindungsgemäß (Beispiels 2 und 3) Formmassen erhalten, die bei gleichem Polyethersulfon- und Kautschukgehalt gegenüber dem Vergleichsbeispiel 1 ein wesentlich höheres Niveau der Zähigkeit bei tiefen Temperaturen besitzen. Außerdem ist bei den erfindungsgemäßen

Beispielen 2 und 3 der Zäh/Spröd-Übergang nach sehr tiefen Temperaturen verschoben (<-60°C). Sämtliche Probekörper besaßen vollkommen gleichmäßige Oberflächen. Das günstige ESC-Verhalten bleibt auch bei Verwendung der speziell gepfropften Silikonkautschuke voll erhalten.

| Zusammensetzung und Eigenschaften der Formmassen | | | | | | | | |
|---|---|---|---|---|---|---|---|---|
| Beispiel | Komponenten | | | | Kerbschlagzähigkeit $a_k$ bei -20°C kJ/m² | Zäh/Spröd-Übergang °C | Vicat B 120 DIN 53 460 °C | Bruch bei $\epsilon_x$ % |
| | A | B* | $B_1$ | $B_2$ | | | | |
| | Gew.-% | | Gew.-% | | | | | |
| 1 (Vergleich) | 75 | 25 | - | - | 25,8 | 0 -10 | 169 | 2,4** |
| 2 | 75 | - | 25 | - | 38,6 | <-60 | 164 | 2,4** |
| 3 | 75 | - | - | 25 | 41,5 | <-60 | 169 | 2,4** |

B* Pfropfpolymerisat von 50 Gew.-Teilen eines Copolymerisats aus Styrol und Acrylnitril im Verhältnis 72:28 auf 50 Gew.-Teile teilchenförmigen Polybutadienkautschuk (Teilchengröße $d_{50}$: 0,4 µm) hergestellt durch E ulsionspolymerisation.

** kein Bruch nach 10 Minuten

## Ansprüche

1. Thermoplastische Formmassen enthaltend

A.

5 bis 99 Gew.-%, eines aromatischen Polyethersulfons mit einer Grundstruktur, die aus wiederkehrenden Einheiten der Formel

-[-O-Z-O-W-]-

besteht, worin

Z den Rest eines zweiwertigen Phenols und W den Rest einer benzoiden Dihalogenverbindung mit einer inerten, elektronenanziehenden Gruppe bedeuten,

B.

1 bis 95 Gew.-%, bezogen auf die Summe A + B, eines Silikonpfropfpolymerisats aus

B.1

5 bis 90 Gewichtsteilen einer Mischung aus

B.1.1

einer Mischung aus - jeweils bezogen auf Komponente B.1 - 30 bis 40, Gew.-% α-Methylstyrol, 52 bis 62, Gew.-% Methylmethacrylat und 4 bis 14, Gew.-% Acrylnitril und/oder

B.1.2

einer Mischung aus

B.1.2.1

50 bis 95 Gew.-Teilen Styrol, α-Methylstyrol, $C_1$-$C_4$-Alkyl-oder Halogen-kernsubstituiertem Styrol, Methylmethacrylat oder Mischungen daraus und

B.1.2.2

5 bis 50 Gew.-Teilen Acrylnitril, Methacrylnitril, Methylmethacrylat, Maleinsäureanhydrid, $C_1$-$C_4$-Alkyl-bzw. Phenyl-N-substituiertem Maleinimid oder Mischungen daraus, sowie gegebenenfalls

B.1.2.3

0 bis 40 Gew.-Teilen Acrylsäureester eines primären oder sekundären einwertigen aliphatischen $C_2$-$C_{10}$-Alkohols und/oder

B.1.2.4

0 bis 10 Gew.-Teilen Acryl- oder Methacrylsäureester des tert.-Butanols auf

B.2

10 bis 95 Gew.-Teile Silikonkautschuk mit einem mittleren Teilchendurchmesser $d_{50}$ von 0,09 bis 1 µm und einem Gelgehalt von mehr als 50 Gew.-%, bezogen auf B.2, erhältlich aus

a. Dihalogendiorganosilan,

b. 0 bis 10 Mol-%, bezogen auf a., Trihalogenorganosilan,

c. 0 bis 3 Mol-%, bezogen auf a., Tetrahalogensilan und

d. 0 bis 0,5 Mol-%, bezogen auf a., Halogentriorganosilan, wobei die Organylreste der Verbindungen a., b. und d.

α) $C_1$-$C_6$-Alkyl oder Cyclohexyl,

β) $C_6$-$C_{12}$-Aryl,

γ) $C_1$-$C_6$-Alkenyl und

δ) Mercapto-$C_1$-$C_6$-alkyl,

bedeuten können mit der Maßgabe, daß die Summe (γ + δ) 2 bis 10 Mol-%, bezogen auf alle Organylreste der Verbindungen a., b. und d., und das Molverhältnis γ:δ (3:1) bis (1:3) betragen.

2. Formmassen gemäß Anspruch 1 enthaltend 40 bis 98 Gew.-% Komponente A und 2 bis 60 Gew.-% Komponente B.

3. Formassen gemäß Anspruch 1 enthaltend 60 bis 97 Gew.-% Komponente A und 3 bis 40 Gew.-% Komponente B.

4. Formmassen gemäß Ansprüchen 1 bis 3, dadurch gekennzeichnet, daß das Pfropfpolymerisat B aus 20 bis 80 Gew.-Teilen Pfropfmonomeren B.1.1 und/oder B.1.2 und 20 bis 80 Gew.-Teilen Silikonkautschuk B.2 hergestellt wird.

5. Formmassen gemäß Anspruch 1, dadurch gekennzeichnet, daß der Teilchendurchmesser $d_{50}$ des Silikonkautschuks B.2 0,09 bis 0,4 µm beträgt.

6. Formmassen gemäß Anspruch 1, dadurch gekennzeichnet, daß der Gelgehalt des Silikonkautschuks B.2 mehr als 70 Gew.-% beträgt.

7. Formmassen gemäß Anspruch 6, dadurch gekennzeichnet, daß der Gelgehalt des Silikonkautschuks B.2 73 bis 98 Gew.-% beträgt.

8. Formmassen gemäß Anspruch 1, dadurch gekennzeichnet, daß von den Organylresten der Komponenten a., b. und d. mindestens 80 Mol-% Methyl der Gruppe α ist, die Reste γ Vinyl-und/oder Allylgruppen und die Reste δ Mercaptopropylreste sind.

9. Formmassen gemäß Anspruch 1, dadurch gekennzeichnet, daß sie zusätzlich mindestens einen Zusatz, ausgewählt aus der Gruppe der Stabilisatoren, Pigmente, Entformungsmittel, Flammschutzmittel und Antistatika, enthalten.

10. Verfahren zur Herstellung der Formmassen der Ansprüche 1 bis 9, dadurch gekennzeichnet, daß man die Komponenten A, B und gegebenenfalls Stabilisatoren, Pigmente, Entformungsmittel, Flammschutzmittel und/oder Antistatika in bekannter Weise vermischt und bei erhöhter Temperatur in üblichen Vorrichtungen schmelzcompoundiert oder schmelzextrudiert.